(19) Europäisches Patentamt
European Patent Office
Office européen des brevets

(11) Veröffentlichungsnummer: **0 492 237 A1**

# (12) EUROPÄISCHE PATENTANMELDUNG

(21) Anmeldenummer: **91121046.6**

(51) Int. Cl.$^{5}$: **C08G 63/60**, G03G 9/087

(22) Anmeldetag: **09.12.91**

(30) Priorität: **22.12.90 DE 4041520**

(43) Veröffentlichungstag der Anmeldung:
**01.07.92 Patentblatt 92/27**

(84) Benannte Vertragsstaaten:
**BE CH DE FR GB IT LI NL**

(71) Anmelder: **BAYER AG**

**W-5090 Leverkusen 1 Bayerwerk(DE)**

(72) Erfinder: **Wehrmann, Rolf, Dr.**
**Scheiblerstrasse 81**
**W-4150 Krefeld 1(DE)**
Erfinder: **Köcher, Matthias, Dr.**
**Eichen 46**
**W-5063 Overath(DE)**
Erfinder: **Pielartzik, Harald, Dr.**
**1835 Tilton Drive**
**Pittsburgh, PA 15241-2636(US)**
Erfinder: **Klug, Günter, Dr.**
**Wiener-Neustädter-Strasse 140**
**W-4019 Monheim 2(DE)**

## (54) Modifizierte Polyesterharze, ein Verfahren zu deren Herstellung und Toner, die solche Polyesterharze enthalten.

(57) Modifizierte Polyesterharze enthalten Polyesterblöcke, die aus Dicarbonsäuren und Dialkoholen erhalten wurden, Gruppierungen der Formeln

```
          O                                     O   O
          ||                                    ||  ||
   -O-X-C-  ,        -O-Y-O-      und   -C-Z-C-

 (gegebenenfalls)    (zwingend)        (zwingend)
```

mit X = Z = einem Kohlenwasserstoffrest mit 1 bis 20 C-Atomen und Y = einem Kohlenwasserstoffrest mit 2 bis 25 C-Atomen, sowie gegebenenfalls Gruppierungen stammend aus Vernetzern. Sie können als Basispolymere für Toner verwendet werden.

EP 0 492 237 A1

Die vorliegende Erfindung bezieht sich auf neue modifizierte Polyesterharze, ein Verfahren zu deren Herstellung aus Polyestern, die aus aromatischen Dicarbonsäuren und Dialkoholen erhalten wurden und Toner, die solche modifizierten Polyesterharze als Basispolymere bzw. Tonerharze enthalten.

Es ist bekannt, daß bisher als Tonerharze Harze auf der Basis von nicht blockartig aufgebauten Polyestern ohne die erfindungsgemäße Komponente b) zum Einsatz gelangen (siehe US-PS 4 891 293, EP-OS 291 059 und EP-OS 333 498), bei denen die Kombinationen der verschiedenen Eigenschaften noch nicht optimal ist.

Es ist ferner die Umsetzung von Polyalkylenterephthalaten nur mit Acetoxybenzoesäure bekannt (siehe J. Polym. Sci. Chem. Ed., 14, 2043 (1976) und US-PS 3 288 755). Ziel der Arbeiten war durch den erhöhten Anteil an aromatischen Bausteinen die Glastemperatur und die Wärmeformbeständigkeit anzuheben sowie den Flammschutz zu verbessern. Gleichzeitig sollte ein höheres mechanisches Eigenschaftsniveau erreicht und die guten rheologischen Eigenschaften flüssigkristalliner Polyester erreicht werden. Die so erhältlichen Produkte sind Konstruktionswerkstoffe. Sie sind aufgrund ihrer physikalisch-chemischen Eigenschaften, insbesondere aufgrund ihrer hohen Schmelzpunkte, nicht für den Einsatz als Basispolymere in Tonern geeignet.

Es wurden nun modifizierte Polyesterharze gefunden, die dadurch gekennzeichnet sind, daß sie enthalten

a) 1 bis 99 Gew.-% eines oder mehrerer Polyesterblöcke, die aus Dicarbonsäuren und Dialkoholen erhalten wurden,

b) 0 bis 60 Gew.-% von Gruppierungen der Formel (I)

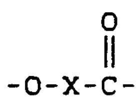 (I),

in der

X für einen Kohlenwasserstoffrest mit 1 bis 20 C-Atomen steht,

c) 1 bis 99 Gew.-% einer Mischung aus

c1) 40 bis 60 Mol-% Gruppierungen der Formel (II)

-O-Y-O- (II),

in der

Y für einen Kohlenwasserstoffrest mit 2 bis 25 C-Atomen steht und

c2) 40 bis 60 Mol-% Gruppierungen der Formel (III)

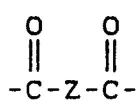 (III),

in der

Z für einen Kohlenwasserstoffrest mit 1 bis 20 C-Atomen steht und

d) 0 bis 10 Gew.-% von Gruppierungen stammend aus tri- oder höherfunktionellen Vernetzern.

Die Komponenten a), b), c) und d) ergänzen sich zu 100 Gew.-%, die Komponenten c1) c2) zu 100 Mol-% c).

Die erfindungsgemäßen modifizierten Polyesterharze enthalten vorzugsweise
5 bis 80 Gew.-% der Komponente a),
0,1 bis 50 Gew.-% der Komponente b),
5 bis 80 Gew.-% der Komponente c), und/oder
0 bis 8 Gew.-% der Komponente d),
wobei sich diese Komponenten zu 100 Gew.-% ergänzen.

Die Komponente a) besteht vorzugsweise aus einem oder mehreren Polyesterblöcken, die aus einer oder mehreren $C_6$ bis $C_{10}$ aromatischen Dicarbonsäuren, insbesondere Iso- und/oder Terephthalsäure und einem oder mehreren Dialkoholen ausgewählt aus der Gruppe aliphatischer Dialkohole mit 2 bis 10 C-Atomen und cycloaliphatischer Dialkohole mit 5 bis 7 C-Atomen erhalten wurden. Besonders bevorzugt besteht die Komponente a) aus einem Polyesterblock, der aus Terephthalsäure und Ethandiol und/oder 1,4-Butandiol erhalten wurde.

Die Komponente b) leitet sich formal von einer Hydroxycarbonsäure mit 2 bis 21 C-Atomen ab. In Formel (I) steht X vorzugsweise für einen aromatischen Rest mit 6 bis 10 C-Atomen, insbesondere für einen Phenyl- oder Naphthylrest. Besonders bevorzugt leitet sich die Komponente b) formal von Salicylsäure, p-Hydroxybenzoesäure oder 2,6-Hydroxynaphthalincarbonsäure ab.

Die Komponente c) leitet sich formal von einem Gemisch aus einem Diol (c1) und einer Dicarbonsäure (c2) ab. Bei dem Rest Y in Formel (II) kann es sich z.B. um einen aliphatischen, cycloaliphatischen, gegebenenfalls mehrkernigen aromatischen oder araliphatischen Rest oder um Gemische davon handeln. Der Rest Y kann auch Heteroatome enthalten, z.B. Sauerstoff-, Schwefel- und/oder Stickstoffatome, Die Komponente c1) leitet sich vorzugsweise ab von Ethandiol, Propandiol, Butandiol, Hexandiol, Decandiol, Neopentylglykol, Cyclohexandimethanol, 2,2'-Di-(4-hydroxycyclohexyl)-propan, bisalkoxyliertem Bisphenol A (wobei das jeweils verwendete Alkoxid z.B. 2 bis 6 C-Atome, vorzugsweise 2 oder 3 C-Atome enthalten hat), Hydrochinon, Resorcin, Bisphenol A, Bis-(hydroxyphenyl)-alkanen, -cycloalkanen, -sulfiden, -ethern, -ketonen, -sulfonen, -sulfoxiden, $\alpha,\alpha'$-Bis-(hydroxyphenyl)-diisopropylbenzolen und entsprechenden kernalkylierten und/oder kernhalogenierten aromatischen Diolen. Besondere Beispiele für aromatische Diole sind solche mit 12 bis 22 C-Atomen wie 4,4-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, $\alpha,\alpha'$-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,2-Bis-(3,5-dimethyl-4-hydroxyphenyl)-2-methylbutan, 1,1-Bis-(3,5-dimethyl-4-hydroxyphenyl)-cyclohexan, $\alpha,\alpha'$-Bis-(3,5-dimethyl-4-hydroxyphenyl-p-diisopropylbenzol, 2,2-Bis-(3,5-dichlor-4-hydroxyphenyl)-propan, 2,4-Bis-(3,5-dibrom-4-hydroxyphenyl)-propan und 4,4'-Dihydroxydiphenylsulfon.

Die Komponente c1) kann sich auch von einem Dihydroxydiphenylcycloalkan der Formel (IV) ableiten

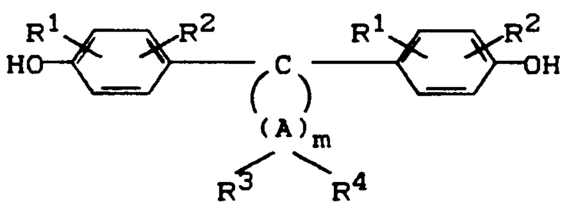

(IV)

in der

| | |
|---|---|
| $R^1$ und $R^2$ | unabhängig voneinander Wasserstoff, Halogen, $C_1$- bis $C_8$-Alkyl, $C_5$- bis $C_6$-Cycloalkyl, $C_6$-bis $C_{10}$-Aryl oder $C_7$- bis $C_{12}$-Aralkyl, |
| m | eine ganze Zahl von 4 bis 7, |
| $R^3$ und $R^4$ | für jedes A individuell wählbar unabhängig voneinander Wasserstoff oder $C_1$- bis $C_6$-Alkyl und |
| A | Kohlenstoff bedeuten, |

insbesondere von 1,1-Bis-(4-hydroxyphenyl)-3,3,5-trimethylcyclohexan, oder von Dianol-2,2- Dianol-3,3 oder einem Diol der Formel (V)

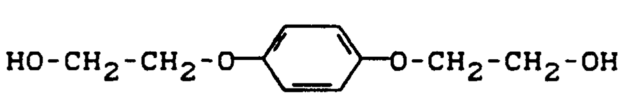

(V)

oder von ethoxylierten und/oder propoxylierten Derivaten der Dihydroxydiphenylcycloalkane der Formel (IV).

Weiterhin kann sich die Komponente c1) ableiten von Alkylenetherglykolen wie Diethylenglykol, Triethylenglykol, Polyethylenglykol, Polytetramethylenetherglykol und Polypropylentetramethylenetherglykol, alicyclischen Diolen wie hydriertes Bisphenol A und aromatischen Diolen wie Polyoxypropylen(2,3)-2,2-bis-(4-hydroxyphenyl)-propan, Polyoxyethylen(2,0)-2,2-bis-(4-hydroxyphenyl)-propan und Polyoxypropylen-p-hydroxybenzolen sowie von 1,7-Heptandiol, 1,8-Octandiol, 1,9-Nonandiol, 2,4-Dimethyl-2-ethylhexan-1,3-diol, 2-Ethyl-2-butyl-1,3-propandiol, 2-Ethyl-2-isobutyl-1,3-propandiol, 3-Methyl-1,5-pentandiol, 2,2,4-Trimethyl-1,6-hexandiol, 1,2-Cyclohexandimethanol, 1,3-Cyclohexandimethanol, 1,4-Cyclohexandimethanol, 2,2,4,4-Tetramethyl-1,3-cyclobutandiol, 4,4'-Thiodiphenol, 4,4'-Methylendiphenol, 4,4'-(2-Norbonyliden)-diphenol, 4,4'-Isopropyliden-diphenol, 4,4'-Isopropyliden-bis(2,6-dichlorphenol), 2,5-Naphthalindiol, p-Xylylendiol, Cyclopentan-1,2-diol, Cyclohexan-1,3-diol und Cyclohexan-1,4-diol.

Die Komponente c2) leitet sich formal von einer Dicarbonsäure mit 3 bis 22 C-Atomen ab. Bei dem Rest Z in Formel (III) kann es sich z.B. um einen aliphatischen, cycloaliphatischen, gegebenenfalls mehrkernigen aromatischen oder araliphatischen Rest oder um Gemische davon handeln. Der Rest Z kann auch ungesättigt sein. Beispielsweise kann sich die Komponente c2) formal von aliphatischen Dicarbonsäuren mit 3 bis 10 C-Atomen, von cycloaliphatischen Dicarbonsäuren mit 7 bis 9 C-Atomen, von aromatischen Dicarbonsäuren mit 8 bis 12 C-Atomen oder von ungesättigten aliphatischen Dicarbonsäuren mit 4 bis 6 C-Atomen ableiten. Besonders bevorzugt leitet sich die Komponente c2) formal ab von Bernsteinsäure, Adipinsäure, Sebacinsäure, Azelainsäure, Maleinsäure, Fumarsäure, Cyclohexandicarbonsäure, Phthalsäure, Isophthalsäure oder Terephthalsäure.

Die Komponente c2) kann sich auch formal von 1,2-Propandicarbonsäure, 1,3-Butandicarbonsäure, 2,3-Butandicarbonsäure, 3-Methyl-glutarsäure, 2,2-Dimethyl-1,3-propandicarbonsäure, 1,2-Dimethyl-1,3-propandicarbonsäure, 1,3-Dimethyl-1,3-propandicarbonsäure, 1,2,3-Trimethyl-1,3-propandicarbonsäure, 2,3-Dimethyl-1,4-butandicarbonsäure, 3,3-Diethyl-1,5-pentandicarbonsäure, Malonsäure, Glutarsäure, alicyclischen Dicarbonsäuren wie Cyclohexandicarbonsäure, aromatischen Dicarbonsäuren wie 3,5-Toluoldicarbonsäure, 2,4-Toluoldicarbonsäure, 2,5-Toluoldicarbonsäure und Naphthalin-dicarbonsäuren, weiterhin von den Anhydriden und Alkylestern der vorstehenden Dicarbonsäuren.

Die Komponente d) kann sich beispielsweise formal von einem tri- oder höherfunktionellen Alkohol und/oder einer tri-oder höherfunktionellen Carbonsäure ableiten. Die Funktionalität kann in beiden Fällen z.B. 3 bis 6 sein. Vorzugsweise leitet sich die Komponente d) formal ab von Glycerin, Trimethylolpropan, Pentaerythrit, Trimellitsäure oder Pyromellitsäure. Weiterhin kann sich die Komponente d) formal ableiten von Trimellithsäureanhydrid, Pyromellithsäureanhydrid, 4-Methylcyclohexan-1,2,3-tricarbonsäureanhydrid, Trimesinsäure und 5-(2,5-Dioxotetrahydrofurfuryl)-3-methyl-3-cyclohexen-1,2-dicarbonsäureanhydrid, sowie von Hydroxyterephthalsäure, Resorcylsäure und di- und höherfunktionellen Hydroxycarbonsäuren.

Die vorliegende Erfindung betrifft weiterhin ein Verfahren zur Herstellung von modifizierten Polyesterharzen aus einem Polyester oder einen Polyestergemisch, erhalten aus Dicarbonsäuren und Dialkoholen, das dadurch gekennzeichnet ist, daß man

a) 1 bis 99 Gew.-% des Polyesters oder Polyestergemisches mit
b) 0 bis 60 Gew.-% einer Hydroxycarbonsäure mit 2 bis 21 C-Atomen oder einem Derivat davon,
c) 1 bis 99 Gew.-% einer Mischung aus c1) 40 bis 60 Mol-% eines Diols mit 2 bis 25 C-Atomen und c2) 40 bis 60 Mol-% einer Dicarbonsäure mit 3 bis 22 C-Atomen oder einem Derivat davon und
d) 0 bis 10 Gew.-% eines Vernetzers

bei Temperaturen im Bereich 130 bis 350 °C und gegebenenfalls in Gegenwart von Umesterungskatalysatoren umsetzt. Die Komponenten a) bis d) ergeben dabei 100 Gew.-%, die Komponenten c1) und c2) 100 Mol-% c).

Vorzugsweise setzt man ein
5 bis 80 Gew.-% der Komponente a),
0,1 bis 50 Gew.-% der Komponente b),
5 bis 80 Gew.-% der Komponente c) und/oder
0 bis 8 Gew.-Teile der Komponente d).

Für das erfindungsgemäße Verfahren geeignete Komponenten a) können z.B. von den verschiedensten Herstellern als Handelsprodukte bezogen oder aus Dicarbonsäuren und Dialkoholen nach bekannten Verfahren hergestellt werden. Bevorzugt sind dabei diejenigen Dicarbonsäuren und Dialkohole, die bei der Beschreibung der Komponente a) der erfindungsgemäßen modifizierten Polyesterharze als bevorzugt und besonders bevorzugt angegeben sind (Details siehe weiter oben).

Für das erfindungsgemäße Verfahren geeignete Komponenten b) sind vorzugsweise aromatische Hydroxycarbonsäuren mit insgesamt 7 bis 11 C-Atomen. Besonders bevorzugt ist Salicylsäure und p-Hydroxybenzoesäure. Geeignete Derivate von Hydroxycarbonsäuren sind beispielsweise $C_1$- bis $C_4$-Acyloxy-carbonsäuren, insbesondere $C_2$- und $C_3$-Acyloxycarbonsäuren. Von den Hydroxycarbonsäurederivaten ist p-Acetoxybenzoesäure bevorzugt. Hydroxycarbonsäurederivate können gegebenenfalls in einem dem eigentlichen erfindungsgemäßen Verfahren vorgelagerten Schritt hergestellt werden, Beispielsweise kann man so eine Acyloxybenzoesäure aus der entsprechenden Hydroxybenzoesäure und dem entsprechenden Anhydrid, z.B. Acetanhydrid, erhalten, Vorzugsweise werden eingesetzt Salicylsäure, p-Hydroxybenzoesäure oder 2,6-Hydroxynaphthalincarbonsäure.

Für das erfindungsgemäße Verfahren geeignete Komponenten c1) sind beispielsweise und vorzugsweise diejenigen Diole, von denen sich die Komponente c1) der erfindungsgemäßen modifizierten Polyesterharze beispielsweise und vorzugsweise formal ableiten kann (Details siehe weiter oben).

Für das erfindungsgemäße Verfahren geeignete Komponenten c2) sind beispielsweise und vorzugsweise diejenigen Dicarbonsäuren, von denen sich die Komponente c2) der erfindungsgemäßen modifizierten Polyesterharze beispielsweise und vorzugsweise formal ableiten kann (Details siehe weiter oben). Als Dicarbonsäurederivate kommen z.B. Anhydride und Ester dieser Dicarbonsäuren in Frage. Als Beispiele seien Maleinsäureanhydrid, Phthalsäureanhydrid, deren Ester mit $C_1$- bis $C_4$-Alkobolen und derartige Ester von Terephthal-, Isophthal-, Adipin-, Sebazin- und Cyclohexandicarbonsäure genannt.

Für das erfindungsgemäße Verfahren geeignete Komponenten d) sind beispielsweise und vorzugsweise diejenigen tri- oder höherfunktionellen Alkohole und Carbonsäuren, von denen sich die Komponente d) der erfindungsgemäßen modifizierten Polyesterharze beispielsweise und vorzugsweise formal ableiten können (Details siehe weiter oben).

Bevorzugte Temperaturen für das erfindungsgemäße Verfahren sind 150 bis 300 °C, insbesondere 180 bis 280 °C. Es kann vorteilhaft sein, das erfindungsgemäße Verfahren bei relativ niedrigen Temperaturen zu beginnen, z.B. bei 130 bis 220 °C und es bei relativ hohen Temperaturen zu beenden, z.B. bei 250 bis 350 °C.

Im Prinzip kann das erfindungsgemäße Verfahren bei beliebigen Drucken durchgeführt werden. Vorzugsweise wird der Druck so gewählt, daß bei der jeweils herrschenden Temperatur sich bildende niedermolekulare Nebenprodukte, z.B. Wasser, Säuren und/oder Alkohole, gasförmig aus dem Reaktionsgemisch entweichen. Häufig sind dazu Drucke im

Bereich 1 mbar bis 2 bar geeignet, insbesondere solche von 5 mbar bis 1 bar. Es kann vorteilhaft sein, das erfindungsgemäße Verfahren bei relativ hohem Druck zu beginnen, z.B. bei Normaldruck, und den Druck während des Verfahrens abzusenken, z.B. bis auf 5 bis 20 mbar.

Die Reaktionszeit für das erfindungsgemäße Verfahren kann z.B. zwischen 1 Stunde und 20 Stunden liegen.

Als gegebenenfalls einzusetzende Umesterungskatalysatoren kommen für Umesterungszwecke bekannte Katalysatoren in Frage wie Titanalkohole, Antimontrioxid, Germaniumacetat, Magnesiumacetat, p-Toluolsulfonsäure oder Mineralsäuren, wobei sich diese auch in situ bilden können, z.B. Magnesiumacetat aus elementarem Magnesium und Essigsäure. Vorzugsweise wird das erfindungsgemäße Verfahren in Gegenwart von weniger als 1 Gew.-% Umesterungskatalysator, bezogen auf den gesamten Reaktionsansatz, durchgeführt.

Die nach Durchführung des erfindungsgemäßen Verfahrens erhältlichen modifizierten Polyesterharze weisen im allgemeinen Molekulargewichte zwischen 1000 und 50 000 auf (bestimmt nach der Gelpermeationschromatographie-Methode mit Methylenchlorid als Lösungsmittel und Eichung mit Polystyrol).

Die vorliegende Erfindung betrifft weiterhin Toner, die dadurch gekennzeichnet sind, daß sie als Basispolymere die zuvor beschriebenen modifizierten Polyesterharze enthalten.

Toner finden Verwendung bei der Entwicklung von elektrostatischen Ladungsbildern, z.B. bei der Elektrofotografie, der Elektrografie und der Ionografie sowie bei der Entwicklung magnetostatischer Ladungsbilder bei der Magnetografie.

Von diesen Verfahren hat die Elektrofotografie (siehe z.B. US-PS 2 297 691, US-PS 3 666 363 und US-PS 4 071 361) die mit Abstand größte Bedeutung erlangt. Bei der Elektrofotografie wird auf einem Fotoleiter durch Belichtung des Orginals oder Umsetzung einer digitalisierten Bildinformation mit Hilfe eines Lasers, eines LED-Arrays oder einer LCS-Einheit ein virtuelles Bild in Form von elektrostatischen Ladungen erzeugt. Die Entwicklung dieses Ladungsbildes des sich auf der Oberfläche einer rotierenden Walze befindlichen Fotoleiters erfolgt durch Kontakt mit einem Toner. Der das Bild aufbauende Toner wird durch eine Saugspannung von der Oberfläche des Fotoleiters auf das Trägermaterial (z.B. Papier oder Folie) übertragen und dort fixiert.

Die Entwicklung des Ladungsbildes auf der Oberfläche des Fotoleiters kann nach 2 Methoden erfolgen, dem Einkomponenten- oder dem Zweikomponentenverfahren.

Beim Zweikomponentenverfahren (siehe z.B. US-PS 2 874 063) werden Tonerteilchen mit einer Partikelgröße von beispielsweise 5 bis 30 µm, die ein Basispolymeres (z.B. 70 bis 95 Gew.-%), ein oder mehrere Pigmente (z.B. 3 bis 20 Gew.-%) und gegebenenfalls weitere Additive enthalten, durch mechanische Agitation mit magnetischen Trägerteilchen einer Partikelgröße von beispielsweise 30 bis 200 µm (z.B. Roheisen, beschichtetes Roheisen oder Ferrite) triboelektrisch aufgeladen und bilden so eine Schicht auf der Oberfläche der entgegengesetzt aufgeladenen Trägerteilchen. Die Trägerteilchen werden dann mit Hilfe eines Magnetfeldes an einer rotierenden Walze radial ausgerichtet und in permanenten Kontakt mit dem ebenfalls rotierenden Fotoleiter gebracht. Die an den Trägerteilchen haftenden Tonerpartikel werden auf die

dem virtuellen Ladungsbild entsprechenden entgegengesetzt aufgeladenen Stellen übertragen.

Beim Einkomponentenverfahren (siehe z.B. US-PS 3 909 258) werden als Toner Carrier-Toner-Hybridteilchen mit einer Partikelgröße von z.B. 5 bis 30 µm verwendet, die z,B, 20 bis 70 Gew.-% magnetische Pigmente, z.B. 25 bis 65 Gew.-% Basispolymere und gegebenenfalls zusätzlich noch Additive enthalten, Der Toner wird in diesem Fall elektrisch oder triboelektrisch vorgeladen und durch ein radial orientiertes Magnetfeld an der Oberfläche einer rotierenden Walze in räumliche Nähe des Fatoleiters gebracht. Die Tonerteilchen werden dann auf die dem virtuellen Ladungsbild entsprechenden geladenen Stellen übertragen.

Daneben existieren weitere Entwicklungstechniken (siehe z.B. US-PS 2 618 552 und US-PS 2 221 776), welche sich jedoch in der Praxis nicht im gleichen Umfang durchsetzen konnten.

Die Bildqualität der Reproduktion hängt immer in entscheidender Weise von den Eigenschaften des Toners ab.

Bei der Fixierung des auf das Trägermaterial übertragenen Toners haben sich in der Praxis zwei Techniken durchgesetzt, nämlich die Flashfixierung und die Heißwalzenfixierung.

Die Flashfixierung beruht auf einer schnellen, kontaktlosen Aufheizung des Toners auf dem Trägermaterial durch eine Blitzlichtlampe, wobei der Toner in die Trägermaterialoberfläche einschmilzt.

Speziell bei Hochleistungskopierern und kompakten Systemen (z.B. Laserdruckern und Tischkopierern) wird die Heißwalzenfixierung angewendet. Hier wird das Trägermaterial mit dem anhaftenden Toner in Kontakt mit einer beheizten Walze gebracht, die den Toner unter Druck und Hitze mit der Trägermaterialoberfläche dauerhaft verbindet.

Die Produktanforderungen sind bei diesen beiden Fixiertechniken sehr verschieden.

Für die Flashfixierung ist eine niedrige Schmelztemperatur und eine große Viskositätserniedrigung bei steigender Temperatur notwendig, um die für den Schmelzvorgang benötigte Energiemenge möglichst gering zu halten. Die Schmelztemperatur des Basispolymeren im Toner kann jedoch nicht beliebig niedrig gewählt werden, da eine störungsfreie Entwicklung nur mit Basispolymeren gewährleistet ist, die Glastemperaturen oberhalb von 40 ° C, insbesondere oberhalb von 55 ° C aufweisen.

Im Falle der Heißwalzenfixierung ist neben einer relativ niedrigen Erweichungstemperatur eine geringe Erniedrigung der Viskosität bei steigender Temperatur erforderlich. Im Falle eines zu ausgeprägten Abfalls der Viskosität, mangelnder Elastizität der Schmelze und/oder geringer Abhäsivität gegenüber dem Walzenmaterial kommt es zum sogenannten "hot offset", d.h. zum Anhaften von Tonermaterial an der Fixierwalze. Das Intervall zwischen niedrigster möglicher Fixierungstemperatur und der Temperatur bei der das "hot offset" beginnt - das sogenannte Fixierfenster - sollte möglichst groß sein. Das Fixierfenster kann gegebenenfalls durch spezielle Additive (z.B. Polyolefinwachse), welche dem Toner in Mengen von beispielsweise bis zu 5 Gew.-%, vorzugsweise in Mengen von 2 bis 3 Gew.-%, zugesetzt werden, verbreitert werden.

Die Fixiereigenschaften von Tonern werden entscheidend durch das verwendete Basispolymer bestimmt, das auch als Tonerharz bezeichnet wird, Daneben werden auch mechanische Eigenschaften, Glastemperatur und für den Tonerherstellungsprozeß bedeutsame Eigenschaften (z.B. Mahlbarkeit, Rieselfähigkeit des Toners, Dispergierfähigkeit für Pigmente) durch das Basispolymere stark beeinflußt.

Basispolymere für Toner bzw. Tonerharze müssen also eine Vielzahl von Eigenschaften in sich vereinigen. Die erfindungsgemäßen Toner, die speziell modifizierte Polyesterharze als Basispolymer enthalten, erfüllen das Anforderungsprofil an Toner in hervorragender Weise.

Durch Variation der Einzelkomponenten und deren quantitativer Mischung können sie auch an bestimmte Prozesse (z.B. bestimmte Entwicklungs- und/oder Fixierungsprozesse) angepaßt werden.

Erfindungsgemäße Toner können neben den im Rahmen der vorliegenden Erfindung wesentlichen modifizierten Polyesterharzen übliche Zusätze in den üblichen Mengen enthalten (z.B. 5 bis 10 Gew.-% Pigmente wie z.B. Ruß, 0,5 bis 3 Gew.-% Additive zur Vergrößerung des Fixierfensters, 0,5 bis 3 Gew.-% Ladungskontrollsubstanzen und im Falle von Einkomponententonern z.B. 20 bis 60 Gew.-% magnetische Pigmente, wie Bayferrox® 8600 oder 8610).

Die erfindungsgemäßen Toner zeichnen sich insbesondere dadurch aus, daß ihr Basispolymeres bzw. Tonerharz eine relativ hohe Glastemperatur (z.B. im Bereich 40 bis 80 ° C) eine relativ niedrige Erweichungstemperatur und gute rheologische Eigenschaften aufweist. Die erfindungsgemäßen Polyesterharze sind nicht empfindlich gegen Weichmacher (wie sie z.B. in aus Polyvinylchlorid hergestellten Klarsichthüllen für Schriftgut enthalten sind), haben eine gute Dispergierfähigkeit für magnetische Pigmente und sonstige Additive, haben eine hohe Transparenz (insbesondere erforderlich für Farbkopien), weisen ein gutes Penetrationsvermögen in die Oberfläche von Papier auf, lassen sich leicht mahlen und ergeben Toner mit guten Aufladungscharakteristiken (z.B. guten Langzeitstabilitäten und guter Unabhängigkeit von klimatischen Einflüssen), guter Abhäsivität zu den bei der Heißwalzenfixierung eingesetzten Walzenmaterialien und

exellenter "hot offset"-Resistenz. Man kann deshalb häufig auf Fixier-Additive verzichten oder sie in geringeren Mengen als üblich einsetzen. Erfindungsgemäße Toner eignen sich auch gut für Hochgeschwindigkeitskopiersysteme und die Flash-Fixiermethode.

## Beispiele

### Allgemeines

Die Komponenten a), gegebenenfalls b), c1), c2) und gegebenenfalls d) wurden in den in der Tabelle angegebenen Mengen zusammen mit jeweils 0,03 g Mg-Pulver in einem evakuierbaren Reaktionsgefäß vermischt und zunächst bei Normaldruck für 1 Stunde auf 280 ° C erhitzt. Danach wurde das Reaktionsgemisch 3 Stunden bei 280 ° C und 300 mbar und anschließend noch 1 Stunde bei 280 ° C und 10 mbar gehalten (jeweils Badtemperatur).

Bei dem jeweils erhaltenen Produkt wurde die Glastemperatur $T_g$ durch Differentialthermoanalyse (DSC) ermittelt. Die in der Tabelle angegebenen Temperaturen beziehen sich auf das 2. Aufheizen. Außerdem wurde die Viskosität mit einem Shimadzu-Flowtester CFT-500 ermittelt. Der Anpreßdruck betrug 100 kg, der Stempel hatte eine Fläche von 1 $cm^2$, die Düse eine Länge von 10 mm und einen Durchmesser von 1 mm, der Probenkörper ein Gewicht von 1,5 g. Die Aufheizrate betrug 6 ° C/min.

Die in der Tabelle verwendeten Abkürzungen haben folgende Bedeutungen:

PET = Polyethylenterephthalat mit einer Intrinsic-Viskosität von 1,0 bis 1,3 dl/g, gemessen in Phenol/o-Dichlorbenzol (1:1 Gew.-Teile) bei 25 ° C im Ubbelohe-Viskosimeter.
PBT = Polybutylenterephthalat mit einer Intrinsic-Viskosität von 1,0 bis 1,3 dl/g, gemessen in Phenol/o-Dichlorbenzol (1:1 Gew.-Teile) bei 25 ° C im Ubbelohe-Viskosimeter.
IPS = Isophthalsäure
TPS = Terephthalsäure
TMSA = Trimellithsäureanhydrid
TMP = Trimethylolpropan

Als Komponente b) kam p-Acetoxybenzoesäure, als Komponente c1) 2,2-Bis (4-hydroxy-ethoxy-phenyl)-propan zum Einsatz.

| Beispiel Nr. | Ausgangsmaterialien; Komponente x in g a) | b) | c1) | c2) | d) | Produkteigenschaften Tg (°C) | Viskosität in Pa.s /bei °C |
|---|---|---|---|---|---|---|---|
| 1 | PET 100 | 20 | 118,03 | TPS 61,98 | - | 60 | 3700/100 |
| 2 | PBT 150 | 15 | 103,9 | TPS 51,83 | - | 53 | 9000/80 |
| 3 | PET 150 | 15 | 98,7 | TPS 51,83 | - | 70 | 6500/100 |
| 4 | PBT 150 | 15 | 98,7 | IPS 51,83 | - | 49 | 8000/80 |
| 5 | PBT 150 | 15 | 98,7 | TPS 51,83 | - | 54 | 30000/80 |
| 6 | PET 100 | 20 | 118,03 | TPS 61,98 | - | 73 | 24700/100 |
| 7 | PBT 150 | 37,5 | 73,77 | TPS 38,73 | - | 71 | 14000/100 |
| 8 | PET 150 | 15 | 88,28 | TPS 44,04 | TMSA 2,68 | 73 | 79000/100 |
| 9 | PET 150 | 15 | 85,71 | TPS 47,83 | TMP 1,91 | 74 | 75000/100 |
| 10 | PET + PBT je 315 | 27 | 159,34 | TPS 83,67 | - | 55 | 12000/100 |
| 11 | PET 150 | 15 | 79,65 | TPS 49,24 | TMP 6,14 | 77 | 10200/120 |
| 12 | PET 90 | 63 | 96,39 | TPS 50,61 | - | 71 | 52500/100 |
| 13 | PBT 90 | 63 | 96,39 | TPS 50,61 | - | 58 | 2700/100 |
| 14 | PET 210 | 22,5 | 44,26 | IPS 23,24 | - | 72 | 2400/100 |
| 15 | PET 441 + PBT 189 | 54 | 142,36 | TPS 73,63 | - | 61 | 11400/100 |
| 16 | PET 378 + PBT 252 | 54 | 142,36 | TPS 73,63 | - | 59 | 7700/100 |
| 17 | PET 441 + PBT 189 | 27 | 159,34 | TPS 83,67 | - | 64 | 31400/100 |
| 18 | PET 247,4 + PBT 106 | - | 79,87 | TPS 41,31 | - | 66 | 2500/120 |
| 19 | PET 247,4 + PBT 106 | 30,29 | 78,87 | TPS 37,18 + IPS 4,13 | - | 60 | 6200/100 |

Beispiel 20

93 g des gemäß Beispiel 15 erhaltenen modifizierten Polyesters wurden mit 7 g Spezialschwarz 4 (Firma Degussa) und 3 g Polypropylenwachs (Typ wie in Beispiel 24) bei 150 °C verknetet. Nach Zerkleinerung in einer Schwingmühle, Vermahlung in einer Strahlmühle und anschließender Sichtung auf einen mittleren Partikeldurchmesser von 15 µm wurde ein Toner erhalten. Dieser wies gegenüber einem Reineisencarrier eine Aufladung von -10,5 µC/g auf. Ein Gerätetest zeigte die Langzeitstabilität der Aufladung unter Praxisbedingungen (-10,1 µC/g nach 50.000 Kopien). Die Fixierung mit einem Heißwalzensystem war bereits bei niedrigen Temperaturen möglich. Die Kopien zeigten eine hervorragende Haftung des Toners auf dem Papier (über 95%) Ein "hot offset" trat nicht ein.
Auch bei der Verwendung einer Folie als Trägermedium wurde eine gute Haftung erhalten.

Beispiel 21

Analog Beispiel 20 wurde unter Verwendung des gemäß Beispiel 19 hergestellten modifizierten Polyesters ein Toner hergestellt. Dieser zeigte eine triboelektrische Aufladung von -15,3 µC/g gegenüber einem Reineisencarrier. Ein Gerätetest zeigte die Langzeitstabilität der Aufladung unter Praxisbedingungen (-14,5 µC/g nach 50.000 Kopien). Die Fixierung mit einem Heißwalzengerät war bereits bei niedrigen Temperaturen möglich. Die Kopien zeigten eine herausragende Haftung des Toners auf dem Papier (über 97%).

Beispiel 22

93 g des gemäß Beispiel 1 erhaltenen modifizierten Polyesters wurden mit 7 g Spezialschwarz 4 (Firma Degussa) bei 150 ° C verknetet, Nach Zerkleinerung in einer Schwingmühle, Vermahlung in einer Strahlmühle und anschließender Sichtung auf einen mittleren Durchmesser von 15 µm wurde ein Toner erhalten, welcher eine triboelektrische Aufladung von -8,5 µC/g aufwies. Ein Gerätetest zeigte die Langzeitstabilität der Aufladung unter Praxisbedingungen (-8,0 µC/g nach 50.000 Kopien). Die verwendete Flash-Fixierung lieferte Kopien mit excellenter Haftung.

Beispiel 23

Die Herstellung eines Toners analog Beispiel 22 unter Verwendung des gemäß Beispiel 11 hergestellten modifizierten Polyesters lieferte einen Toner mit einer triboelektrischen Aufladung von -16,4 µC/g. Ein Gerätetest zeigte die Langzeitstabilität der Aufladung unter Praxisbedingungen (-15,9 µC/g nach 50.000 Kopien). Die Fixierung mit einem Heißwalzensystem war bereits bei niedrigen Temperaturen möglich. Die Verwendung von Polypropylenwachs zur Vermeidung des "hot offset" war nicht nötig, da dieser Toner bereits ohne Additive eine vorzügliche hot-offset-Resistenz zeigte, d.h. ein breites sog. Fixierfenster aufwies.

Beispiel 24

93 g des gemäß Beispiel 17 erhaltenen modifizierten Polyesters wurden mit 7 g Spezialschwarz 4 (Firma Degussa), 3 g Polypropylenwachs (Viscol® 550 P der Firma Sanyo) sowie 60 g Ferrit (Bayferrox® 8600) bei 150 ° C verknetet. Nach Zerkleinerung in einer Schwingmühle, Vermahlung in einer Strahlmühle und anschließender Sichtung auf einen mittleren Durchmesser von 15 µm wurde ein Toner erhalten, welcher eine triboelektrische Aufladung von -5,4 µC/g aufwies. Ein Gerätetest zeigte eine gute Performance unter Praxisbedingungen (Langzeitstabilität der Aufladung: -5,3 µC/g nach 50.000 Kopien; Haftung: über 97%). Eine elektronenmikroskopische Untersuchung zeigte eine einwandfreie Dispergierung des magnetischen Pigments im Toner.

**Patentansprüche**

**1.** Modifizierte Polyesterharze, dadurch gekennzeichnet, daß sie enthalten
a) 1 bis 99 Gew.-% eines oder mehrerer Polyesterblöcke, die aus Dicarbonsäuren und Dialkoholen erhalten wurden,
b) 0 bis 60 Gew.-% von Gruppierungen der Formel (I)

$$-O-X-\overset{\overset{\displaystyle O}{\|}}{C}- \qquad (I),$$

in der
X für einen Kohlenwasserstoffrest mit 1 bis 20 C-Atomen steht,
c) 1 bis 99 Gew.-% einer Mischung aus

c1) 40 bis 60 Mol-% Gruppierungen der Formel (II)

-O-Y-O- (II),

in der

Y für einen Kohlenwasserstoffrest mit 2 bis 25 C-Atomen steht und

c2) 40 bis 60 Mol-% Gruppierungen der Formel (III)

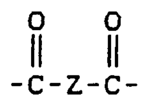

(III),

in der

Z für einen Kohlenwasserstoffrest mit 1 bis 20 C-Atomen steht und

d) 0 bis 10 Gew.-% von Gruppierungen stammend aus tri- oder höherfunktionellen Vernetzern.

wobei sich die Komponenten a), b), c) und d) zu 100 Gew.-% ergänzen und die Komponenten c1) c2) sich zu 100 Mol-% c) ergänzen.

**2.** Modifizierte Polyesterharze nach Anspruch 1, dadurch gekennzeichnet, daß Komponente a) aus einem oder mehreren Polyesterblöcken besteht, die aus einer oder mehreren $C_6$- bis $C_{10}$-aromatischen Dicarbonsäuren und einem oder mehreren Dialkoholen ausgewählt aus der Gruppe aliphatischer Dialkohole mit 2 bis 10 C-Atomen und cycloaliphatischer Dialkohole mit 5 bis 7 C-Atomen erhalten wurde.

**3.** Verfahren zur Herstellung von modifizierten Polyesterharzen aus einem Polyester oder Polyestergemisch, erhalten aus Dicarbonsäuren und Dialkoholen, dadurch gekennzeichnet, daß man

a) 1 bis 99 Gew.-% des Polyesters oder Polyestergemisches mit

b) 0 bis 60 Gew.-% einer Hydroxycarbonsäure mit 2 bis 21 C-Atomen oder einem Derivat davon,

c) 1 bis 99 Gew.-% einer Mischung aus c1) 40 bis 60 Mol-% eines Diols mit 2 bis 25 C-Atomen und c2) 40 bis 60 Mol-% einer Dicarbonsäure mit 3 bis 22 C-Atomen oder einem Derivat davon und

d) 0 bis 10 Gew.-% eines Vernetzers

bei Temperaturen im Bereich 130 bis 350 °C und gegebenenfalls in Gegenwart von Umesterungskatalysatoren umsetzt, wobei die Komponenten a) bis d) 100 Gew.-% und die Komponenten c1) und c2) 100 Mol-% c) ergeben.

**4.** Verfahren nach Anspruch 3, dadurch gekennzeichnet, daß man es bei Temperaturen im Bereich 150 bis 300 °C durchführt.

**5.** Verfahren nach Ansprüchen 3 und 4, dadurch gekennzeichnet, daß man es bei Drucken im Bereich 1 mbar bis 2 bar durchführt.

**6.** Toner, dadurch gekennzeichnet, daß sie als Basispolymere modifizierte Polyesterharze des Anspruchs 1 oder hergestellt nach Anspruch 3 enthalten.

**7.** Toner nach Anspruch 6, dadurch gekennzeichnet, daß sie zusätzlich übliche Zusätze enthalten.

Europäisches Patentamt

# EUROPÄISCHER RECHERCHENBERICHT

Nummer der Anmeldung

EP 91 12 1046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 276 874 (KAWASAKI STEEL CO)<br>* Ansprüche 1,2; Beispiele 1-3,17-19 * | 1-5 | C08G63/60<br>G03G9/087 |
| X | EP-A-0 374 716 (KAWASAKI STEEL CO)<br>*Examples*<br>* Anspruch 1 * | 1-5 | |
| A | US-E-32 136 (SANDHU,M.A. ET AL.)<br>*Abstract*<br>* Ansprüche 1,2,6 * | 1,6 | |
| A | US-A-4 622 268 (YATSU,T. ET AL.)<br>* Anspruch 1; Beispiel 1; Tabelle 1 * | 1,2 | |
| A | US-A-3 477 989 (ZORN,H. ET AL.)<br>* Ansprüche 1-5 * | 1 | |
| A | WORLD PATENTS INDEX LATEST<br>Week 8932,<br>Derwent Publications Ltd., London, GB;<br>AN 89-230811<br>& JP-A-1 165 498 (MITSUBISHI PENCIL) 29. Juni 1989<br>* Zusammenfassung * | 1-5 | |

RECHERCHIERTE SACHGEBIETE (Int. Cl.5)

C08G
G03G

Der vorliegende Recherchenbericht wurde für alle Patentansprüche erstellt

| Recherchenort | Abschlußdatum der Recherche | Prüfer |
|---|---|---|
| BERLIN | 24 MAERZ 1992 | VOIGTLAENDER R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)